# EUROPEAN PATENT APPLICATION

(11) **EP 1 916 657 A1**
(43) Date of publication of application: **30.04.2008**
(21) Application number: 06781435.0
(22) Date of filing: 21.07.2006
(51) Int. Cl.: G11B 17/051

(54) **DISK INSERTION/DISCHARGE DEVICE AND DISK DEVICE**

(30) Priority: 16.08.2005 JP 2005235754
(71) Applicant: MATSUSHITA ELECTRIC INDUSTRIAL CO., LTD., Osaka 571-8501 (JP)
(72) Inventor: URUSHIHARA, Kenji c/o Matsushita Electric Industrial Co., Ltd., Chuo-ku, Osaka-shi, Osaka, 540-6207 (JP); YAMAGUCHI, Yuji c/o Matsushita Electric Industrial Co., Ltd., Chuo-ku, Osaka-shi, Osaka, 540-6207 (JP)
(74) Representative: Pautex Schneider, Nicole Véronique
(86) International application number: PCT/JP2006/314513
(87) International publication number: WO 2007/020770

(57) **Abstract**

A disc device for capable of executing a stable disc ejecting operation by reducing such a chance that a disc contacting portion comes in a cutout (dent) portion of the disc even when a defective disc having the cutout (dent) on its outer shape is inserted into a disc loading and ejecting device is provided. Movable contacting lever members 314, 324 and detecting lever members 313, 323 for detecting a size of a disc 200 and positioning the disc 200 in carrying the disc when these members come into contact with the disc 200 inserted into a disc loading and ejecting device of a disc device 100 are provided. Since the disc 200 is caused to contact the contacting lever members 314, 324 contacting the disc 200 at a plurality of points, a stable disc ejecting operation of the defective disc 200 having a disc cutout portion 200c can be realized.

## Description

### Technical Field

The present invention relates to a disc device and, more particularly, a disc device for attaining an improvement of stability of a disc loading and ejecting device that carries a disc inserted into the disc device.

### Background Art

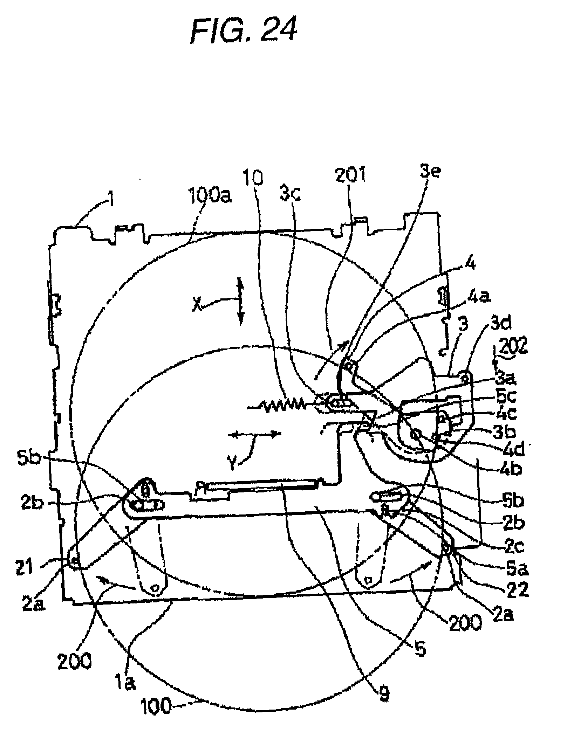

In the prior art, as shown in FIG.24, the disc device such as the onboard audio equipment, or the like having the disc loading and ejecting device has such a configuration that a plurality of lever members for detecting a size of the disc when the lever members contact the disc inserted into the disc device and for positioning the disc when the disc is to be loaded/ejected are provided and also one circular rotatable roller member is provided to a disc contacting portion of each of the lever members.
Patent Literature 1: JP-A-8-45156 (Fig.24)

### Disclosure of the Invention

### Problems that the Invention is to Solve

However, in the conventional disc device having such a configuration that one circular rotatable roller member is provided to each of the disc contacting portions, such a situation may be considered that the defective disc having a cutout (dent) on its outer shape, or the like is inserted into the disc device. When the circular roller member provided to the disc contacting portion of each of the lever members comes in the cutout (dent) portion of the disc, it has possibilities that the lever members do not normally operate and the ejecting operation of the disc cannot be performed.

The present invention has been made to solve the problem in the prior art, and it is an object of the present invention to provide a disc device for capable of executing the stable disc ejecting operation by reducing such a chance that the disc contacting portion comes in the cutout (dent) portion of the disc even when the defective disc having the cutout (dent) on its outer shape, or the like is inserted into the disc device.

### Means for Solving the Problems

A disc loading and ejecting device of the present invention includes contacting lever members that come into contact with a disc to be loaded and ejected; and detecting lever members that hold the contacting lever members movably with respect to the device; wherein the contacting lever members have a plurality of contacting portions respectively that contact the disc at point contacts respectively.

According to this configuration, even when the defective disc having the cutout (dent) on its outer shape is inserted into the device, a stable disc ejecting operation can be carried out by reducing such a chance that the disc contacting portion comes in the cutout (dent) portion of the disc.

### Advantages of the Invention

According to the present invention, the disc is caused to contact the contacting lever members at a plurality of points. Therefore, the disc device for capable of executing the stable disc ejecting operation by reducing such a chance that the disc contacting portion comes in the cutout (dent) portion of the disc even when the defective disc having the cutout (dent) on its outer shape, or the like is inserted into the device can be provided.

### Brief Description of the Drawings

[FIG.1] A general perspective view of a car audio system as an electronic device.
[FIG.2] A top view of a pertinent portion of a disc device of a first embodiment of the present invention.
[FIG.3] A front view of the pertinent portion of the disc device of the first embodiment of the present invention.
[FIG.4] A front view of the pertinent portion of the disc device of the first embodiment of the present invention.
[FIG.5] An exploded perspective view of a pertinent portion of a disc detecting portion in the first embodiment of the present invention,
[FIG.6] An exploded perspective view of the pertinent portion of the disc detecting portion in the first embodiment of the present invention.
[FIG.7] A front view of the pertinent portion of the disc detecting portion in the first embodiment of the present invention.
[FIG.8] A top view of a pertinent portion of a disc device when the disc of the first embodiment of the present invention is passing through a disc loading/ejecting portion.
[FIG.9] A top view of the pertinent portion of the disc device when the disc of the first embodiment of the present invention is passing through the disc loading/ejecting portion.
[FIG.10] A top view of the pertinent portion of the disc device when the disc of the first embodiment of the present invention is passing through the disc loading/ejecting portion.
[FIG.11] A top view of the pertinent portion of the disc device when the disc of the first embodiment of the present invention is passing through the disc loading/ejecting portion.
[FIG.12] A top view of the pertinent portion of the disc device when the disc of the first embodiment of the present invention is passing through the disc loading/ejecting portion.
[FIG.13] A top view of the pertinent portion of the disc device when the disc of the first embodiment of the present invention is passing through the disc loading/ejecting portion.
[FiG.14] A top view of the pertinent portion of the disc device when the disc of the first embodiment of the present invention is passing through the disc loading/ejecting portion.
[FIG.15] A top view of a pertinent portion of a disc device of a second embodiment of the present invention.
[FIG.16] An exploded perspective view of a pertinent portion of a disc detecting portion in the second embodiment of the present invention.
[FIG.17] An exploded perspective view of another pertinent portion of the disc detecting portion in the second embodiment of the present invention.
[FIG.18] A front view of a pertinent portion of the disc detecting portion in the second embodiment of the present invention.
[FIG.19] A top view of a pertinent portion of a disc device when the disc of the second embodiment of the present invention is passing through a disc loading/ejecting portion.
[FIG.20] A top view of the pertinent portion of the disc device when the disc of the second embodiment of the present invention is passing through the disc loading/ejecting portion.
[FIG.21] A top view of the pertinent portion of the disc device when the disc of the second embodiment of the present invention is passing through the disc loading/ejecting portion.
[FIG.22] A top view of the pertinent portion of the disc device when the disc of the second embodiment of the present invention is passing through the disc loading/ejecting portion.
[FIG.23] A top view of the pertinent portion of the disc device when the disc of the second embodiment of the present invention is passing through the disc loading/ejecting portion.
[FIG.24] A top view showing the disc loading/ejecting device (JP-A-8-45156) in the prior art.

### Description of Reference Numerals and Signs

- 10: car audio system (electronic device)
- 11: radio
- 12: cassette tape player
- 12a: cassette tape slot
- 13: front panel
- 13a: display portion
- 13b: power/volume knob
- 100: disc device (first embodiment)
- 100B: disc device (second embodiment)
- 101: case
- 101a: disc slot
- 200: disc
- 200a: recording face
- 200b: label face
- 200c: disc cutout portion
- 200d: adhesive agent
- 300: disc detecting device (first embodiment)
- 300B: disc detecting device (second embodiment)
- 301: light emitting element (disc presence/absence detecting means)
- 302: light receiving element (disc presence/absence detecting means)
- 310: disc detecting portion (first embodiment)
- 311: guide member
- 311a: guide groove
- 311b: guide groove
- 312: position sensor
- 312a: shaft member
- 313: disc detecting lever member
- 313a: shaft member
- 313b: slit
- 314: disc contacting lever member
- 314a: hole
- 314b: shaft member
- 320: disc detecting portion (first embodiment)
- 321: guide member
- 321a: guide groove
- 321b: guide groove
- 322: position sensor
- 322a: shaft member
- 323: disc detecting lever member
- 323a: shaft member
- 323b: slit
- 324: disc contacting lever member
- 324a: hole
- 324b: shaft member
- 350: disc detecting portion (second embodiment)
- 351: disc contacting lever member
- 351a: hole
- 351b: shaft member
- 351c: disc regulating portion
- 352: roller member
- 352a: hole
- 353: roller member
- 353a: hole
- 354: clearance
- 360: disc detecting portion (second embodiment)
- 361: disc contacting lever member
- 361a: hole
- 361b: shaft member
- 361c: disc regulating portion
- 362: roller member
- 362a: hole
- 363: roller member
- 363a: hole
- 364: clearance
- 400: disc loading/ejecting device (first embodiment)
- 400B: disc loading/ejecting device (second embodiment)
- 401: roller member (disc carrying roller)
- 401a: gear member
- 402: roller member (disc regulating member)
- 500: disc recording/playing device
- 501: spindle motor
- 501a: turn table
- 502: optical pickup
- 503: traverse motor

### Best Mode for Carrying Out the Invention

A disc loading/ejecting device and a disc device according to embodiments of the present invention will be explained in detail with reference to the drawings hereinafter.

### (First Embodiment)

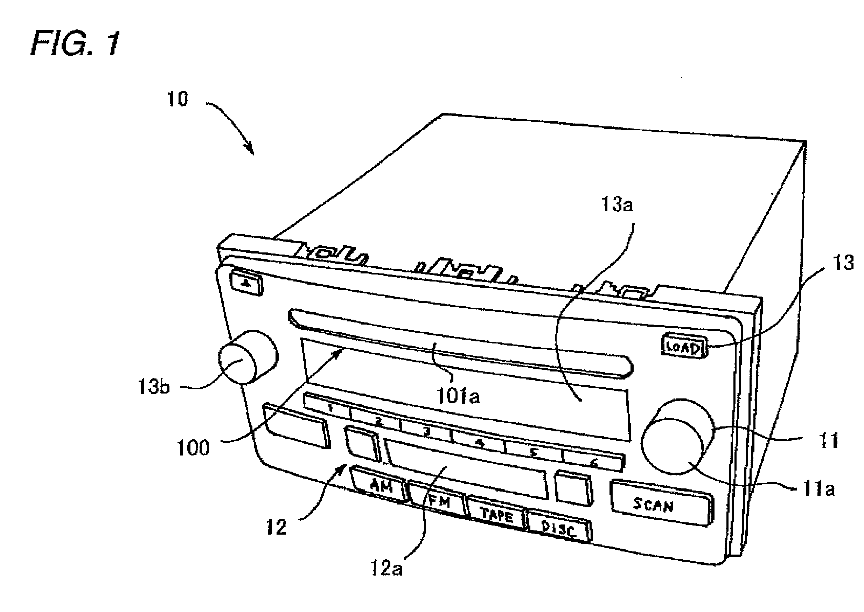

A general perspective view of a car audio system 10 as an electronic device in which a disc device 100 according to embodiments of the present invention is built is shown in FIG.1. This car audio system 10 includes a radio 11, a cassette tape player 12, and the like, in addition to the disc device 100. A disc slot 101a for a disc device 100, a tuning knob 11a for the radio, a cassette tape slot 12a, and the like in addition to a display portion 13a, which is shared with all functions, and a power/volume knob 13b are provided to a front panel 13, Also, a controlling portion (not shown) for controlling the radio 11, the cassette tape player 12, disc device 100, etc. are provided to the inside.

Next, the disc device 100 will be explained hereunder.

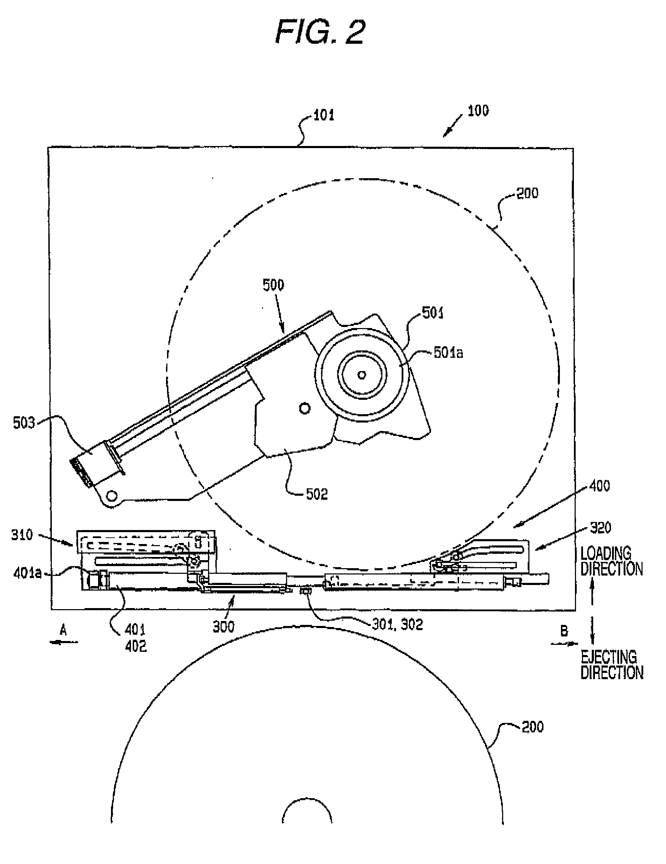

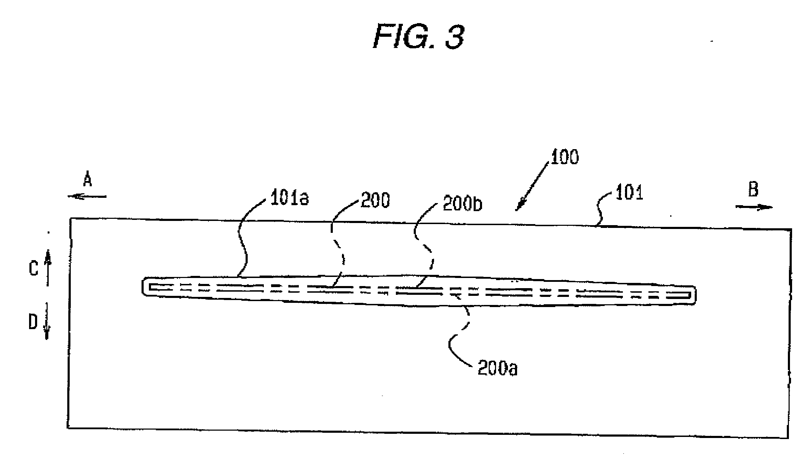

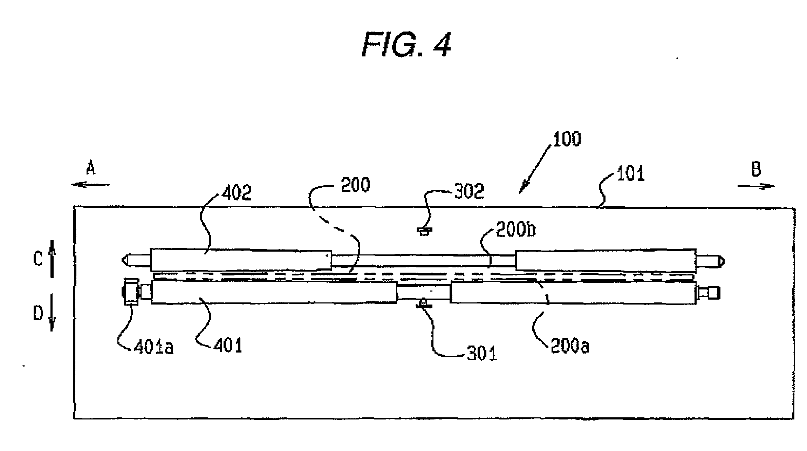

FIG.2 is a top view of a pertinent portion of a disc device according to a first embodiment of the present invention, FIG.3 is a front view of the pertinent portion of the disc device according to the first embodiment of the present invention, and FIG.4 is a front view of the pertinent portion of the disc device according to the first embodiment of the present invention.

In FIG.2 to FIG.4, a disc detecting device 300 for detecting a position and a size of a disc 200 inserted into the disc device 100 and a disc loading/ejecting device 400 for executing loading/ejecting operations of the disc 200 based on the detected result of the disc detecting device 300 are provided to the inside of a case 101 of the disc device 100. Also, the disc slot 101a is arranged on the front surface of the case 101.

Next, the disc loading/ejecting device 400 will be explained hereunder.

In FIG.2 to FIG.4, a pair of roller members 401, 402 as carrying rollers are provided vertically near the disc slot 101a in the inside of the case 101. These roller members 401, 402 contact the inserted disc 200 to transfer a power to it, and thus carry the disc 200 to execute the loading and the eject of the disc 200.

The roller member 401 is provided as the disc carrying roller. The roller member 401 is provided rotatably to the case 101 but fixed in the vertical direction (the C direction or the D direction in Figures) and the longitudinal direction (the loading direction or the ejecting direction in Figures). The roller member 401 contacts a recording face 200a of the inserted disc 200, and holds the recording face 200a at a predetermined height. This roller member 401 is rotated/driven by a gear member 401 a provided to the roller member 401 and a power source (not shown) such as a motor, or the like.

In contrast, the roller member 402 is always energized downward (the D direction in Figures) by a resilient member (not shown). Thus, the roller member 402 is pushed against a label face 200b of the inserted disc 200.

Therefore, when the disc 200 is inserted (loaded) into the disc slot 101a, the roller member 402 is moved upward (the C direction in Figures) against the resilient member due to a thickness of the disc 200, and is pushed against an upper surface of the disc 200 (the D direction in Figures) by a resilient force of the resilient member. Thus, the disc 200 is put between the roller members 401, 402. Since the roller member 401 is rotated/driven whereas the roller member 402 is capable of rotation, the disc 200 is carried into the inside of the case 101. Similarly the ejection of the disc 200 is executed by the rotation of the roller member 401.

Next, the disc detecting device 300 will be explained hereunder.

In FIG.2 to FIG.4, a light emitting element 301 for emitting a light and a light receiving element 302 for receiving the light emitted from the light emitting element 301 are provided as a pair near the disc slot 101 a of the case 101 on the forward side (the ejecting direction in Figures) of the roller members 401, 402. One element of the light emitting element 301 and the light receiving element 302 is provided in a position higher than the disc slot 101a, and the other element is provided in a position lower than the disc slot 101 a. Thus, the light emitted from the light emitting element 301 is received by the light receiving element 302 to pass across the disc slot 101a.

Accordingly, when the disc 200 is inserted into the device, the light emitted from the light emitting element 301 is blocked by the disc 200, and thus an output of the light receiving element 302 is changed. As a result, it is possible to detect the insertion of the disc into the device.

Also, a disc detecting portion 310 is provided near the disc slot 101a of the case 101 on the backward side (the loading direction in Figures) of the roller members 401, 402 and on the left side (the A direction in Figures) of the disc device 100. This disc detecting portion 310 detects a position and a size when the disc 200 is inserted into the interior of the disc device 100. Similarly, a disc detecting portion 320 is provided near the disc slot 101a of the case 101 on the backward side (the loading direction in Figures) of the roller members 401, 402 and on the right side (the B direction in Figures) of the disc device 100. Also, the disc detecting portion 320 detects a position and a size when the disc 200 is inserted into the interior of the disc device 100.

Next, a disc recording/playing device 500 will be explained hereunder.

In FIG.2 to FIG.4, the disc recording/playing device 500 is provided at the center of the case 101. This disc recording/ playing device 500 is equipped with a turn table 501a for holding the center of the disc 200, a spindle motor 501 for turning the turn table 501a, an optical pickup 502 for recording/playing information of the disc 200, a traverse motor 503 for driving the optical pickup 502 toward both inner and outer peripheral directions of the disc, and the like.

Next, the disc detecting portions 310, 320 will be explained hereunder.

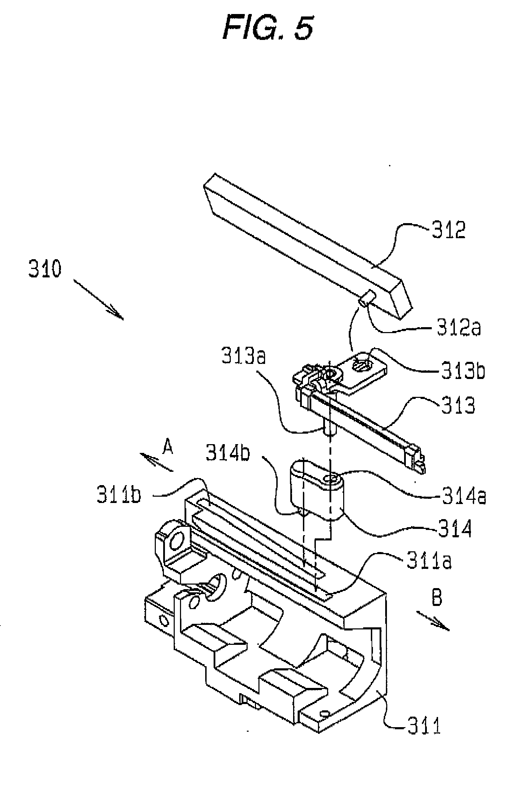

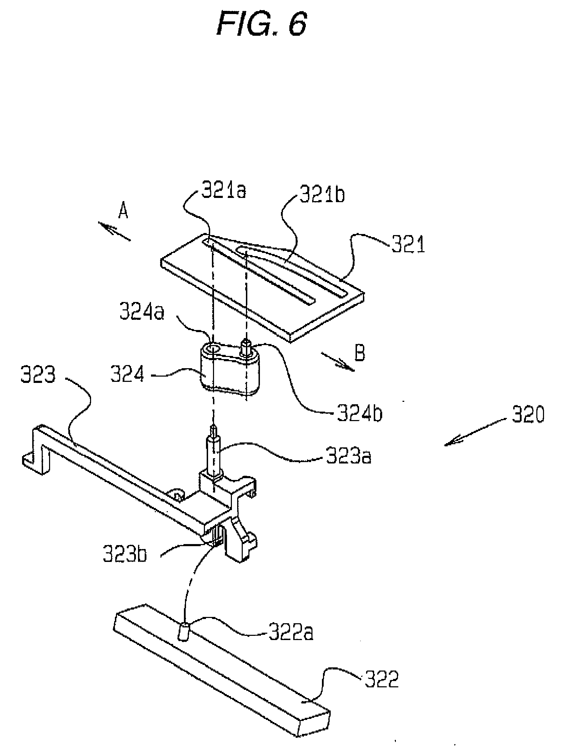

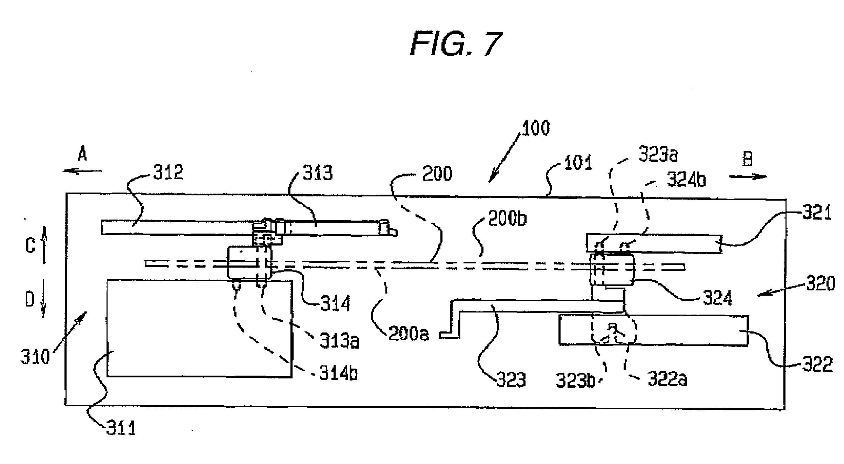

FIG.5 is an exploded perspective view of a pertinent portion of the disc detecting portion in the first embodiment of the present invention, FIG.6 is an exploded perspective view of the pertinent portion of the disc detecting portion in the first embodiment of the present invention, and FIG.7 is a front view of the pertinent portion of the disc detecting portion in the first embodiment of the present invention.

In FIG.5 and FIG.7, the disc detecting portion 310 is constructed by a guide member 311 having guide grooves 311a, 311b, a position sensor 312 having a shaft member 312a, a disc detecting lever member 313 having a shaft member 313a and a slit 313b, and a disc contacting lever member 314 having a hole 314a and a shaft member 314b.

The position sensor 312 and the guide member 311 are fixed with respect to the case 101,

Here, the position sensor 312 is composed of a variable resistor, for example. When a predetermined voltage is applied to the position sensor 312, a current level of an electric signal being output from the position sensor 312 is changed gradually based on an amount of movement of the shaft member 312a of the position sensor 312 with respect to the position sensor 312.

Also, the shaft member 313a of the disc detecting lever member 313 passes through the hole 314a of the disc contacting lever member 314, and engages with the guide groove 311a of the guide member 311. Also, a guiding unit (not shown) other than the shaft member 313a and the guide groove 311a is provided between the disc detecting lever member 313 and the case 101. Also, the disc detecting lever member 313 is provided slidably in the lateral direction (the A direction or the B direction in Figures) with respect to the case 101. Also, the shaft member 314b of the disc contacting lever member 314 engages with the guide groove 311b of the guide member 311. In this case, the guide groove 311a and the guide groove 311b of the guide member 311 are not arranged in parallel, but the guide groove 311a and the guide groove 311b are arranged such that a distance between the guide groove 311a and the guide groove 311b is changed gradually, i.e., a distance between the guide groove 311a and the guide groove 311b is not set constant. Accordingly, the disc contacting lever member 314 can slide in the lateral direction (the A direction or the B direction in Figures) with respect to the case 101 and can turn around the shaft member 313a of the disc detecting lever member 313 as a pivot.

Also, the shaft member 312a of the position sensor 312 engages with the slit 313b of the disc detecting lever member 313. Thus, an amount of movement of the disc detecting lever member 313 in the lateral direction (the A direction or the B direction in Figures) can be detected by the position sensor 312.

In this case, in a positional relationship between the guide member 311 and the disc detecting lever member 313, one member is provided in a higher position than the disc slot 101a and the other member is provided in a lower position than the disc slot 101a. Therefore, heights of both members are set respectively such that only the disc contacting lever member 314 provided between the guide member 311 and the disc detecting lever member 313 contacts the disc 200 inserted into the device.

Accordingly, when the disc 200 is inserted into the disc slot 101a, the outer peripheral surface of the disc 200 is brought into contacts with the disc contacting lever member 314 and then the disc contacting lever member 314 is slid outward (the A direction in Figures). The disc detecting lever member 313 is slid outward (the A direction in Figures) in response to the slide of the disc contacting lever member 314. Then, an amount of slide of the disc detecting lever member 313 is detected by the position sensor 312.

In FIG.6 and FIG.7, the disc detecting portion 320 is constructed by a guide member 321 having a guide groove 321a and a guide groove 321 b, a position sensor 322 having a shaft member 322a, a disc detecting lever member 323 having a shaft member 323a and a slit 323b, and a disc contacting lever member 324 having a hole 324a and a shaft member 324b.

The position sensor 322 and the guide member 321 are fixed to the case 101.

Here, the position sensor 322 is composed of a variable resistor, for example. When a predetermined voltage is applied to the position sensor 322, a current level of an electric signal being output from the position sensor 322 is changed gradually based on an amount of movement of the shaft member 322a of the position sensor 322 with respect to the position sensor 322.

Also, the shaft member 323a of the disc detecting lever member 323 passes through the hole 324a of the disc contacting lever member 324, and engages with the guide groove 321a of the guide member 321. Also, a guiding unit (not shown) other than the shaft member 323a and the guide groove 321a is provided between the disc detecting lever member 323 and the case 101. Also, the disc detecting lever member 323 is provided slidably in the lateral direction (the A direction or the B direction in Figures) with respect to the case 101. Also, the shaft member 324b of the disc contacting lever member 324 engages with the guide groove 321b of the guide member 321. In this case, the guide groove 321a and the guide groove 321b of the guide member 321 are not arranged in parallel, but they are arranged such that a distance between the guide groove 321a and the guide groove 321b is changed gradually, i.e., a distance between the guide groove 321 a and the guide groove 321 b is not set constant. Accordingly, the disc contacting lever member 324 can slide in the lateral direction (the A direction or the B direction in Figures) with respect to the case 101, and can turn around the shaft member 323a of the disc detecting lever member 323 as a pivot.

Also, the shaft member 322a of the position sensor 322 engages with the slit 323b of the disc detecting lever member 323. Thus, an amount of movement of the disc detecting lever member 323 in the lateral direction (the A direction or the B direction in Figures) can be detected by the position sensor 322.

In this case, in a positional relationship between the guide member 321 and the disc detecting lever member 323, one member is provided in a higher position than the disc slot 101a and the other member is provided in a lower position than the disc slot 101a. Therefore, heights of both members are set respectively such that only the disc contacting lever member 324 provided between the guide member 321 and the disc detecting lever member 323 contacts the disc 200 inserted into the device.

Accordingly, when the disc 200 is inserted into the disc slot 101a, the outer peripheral surface of the disc 200 is brought into contacts with the disc contacting lever member 324 and then the disc contacting lever member 324 is slid outward (the B direction in Figures). The disc detecting lever member 323 is slid outward (the B direction in Figures) in response to the slide of the disc contacting lever member 324. Then, an amount of slide of the disc detecting lever member 323 is detected by the position sensor 322.

Also, resilient members (not shown) for energizing the disc detecting lever member 313 and the disc detecting lever member 323 toward the center side of the disc slot are provided between the disc detecting lever member 313 and the disc detecting lever member 323. In a state that the disc 200 does not contact the disc detecting lever member 313 and the disc detecting lever member 323, the disc detecting lever member 313 and the disc detecting lever member 323 contact projections (not shown) provided to the case 101, and thus two disc detecting lever members 313, 323 are held in closed initial positions.

Next, loading/ejecting operations of the disc 200 will be explained hereunder.

### (1) Loading operation of the disc 200

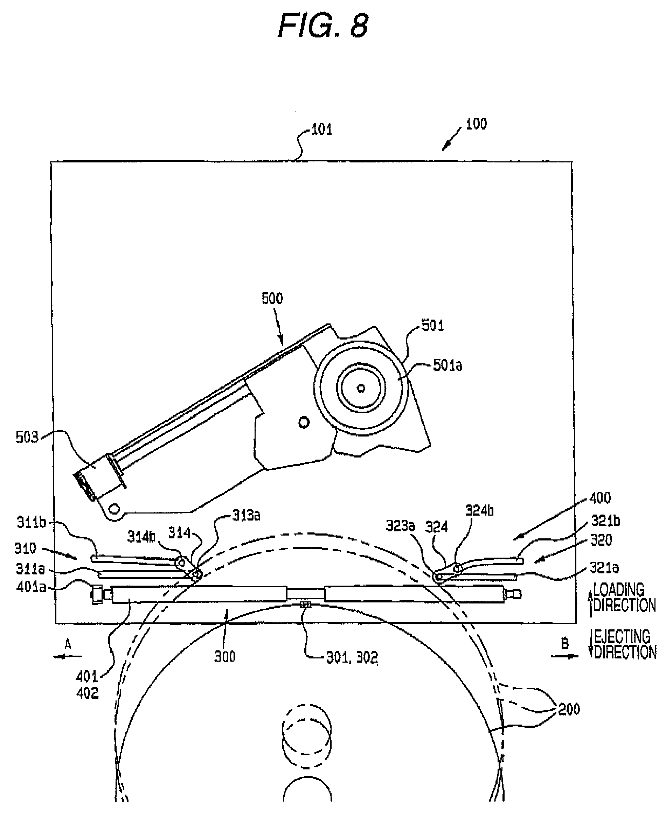

First, the loading operation of the disc 200 by the disc device 100 will be explained with reference to FIG.8 to FIG.10 hereunder. As to the disc detecting portions 310, 320 in FIG.8 to FIG.10, only the guide grooves 311a, 311b of the guide member 311, the shaft member 313a of the disc detecting lever member 313, the disc contacting lever member 314, the guide grooves 321a, 321b of the guide member 321, the shaft member 323a of the disc detecting lever member 323, and the disc contacting lever member 324 are illustrated, and the illustration of other members will be omitted herein.

As shown in FIG.8, when the disc 200 is inserted into the disc slot 101a of the case 101, the light emitted from the light emitting element 301 is blocked by the disc 200, and an output of the light receiving element 302 is changed. Thus, the disc device 100 detects that the disc 200 is inserted into the inside of the disc device 100, and starts the rotation of the roller member 401 by starting an operation of a power supply.

When the disc 200 is further inserted, such disc 200 is put between the roller members 401, 402 and carried through there. Thus, the auto loading of the disc 200 is started.

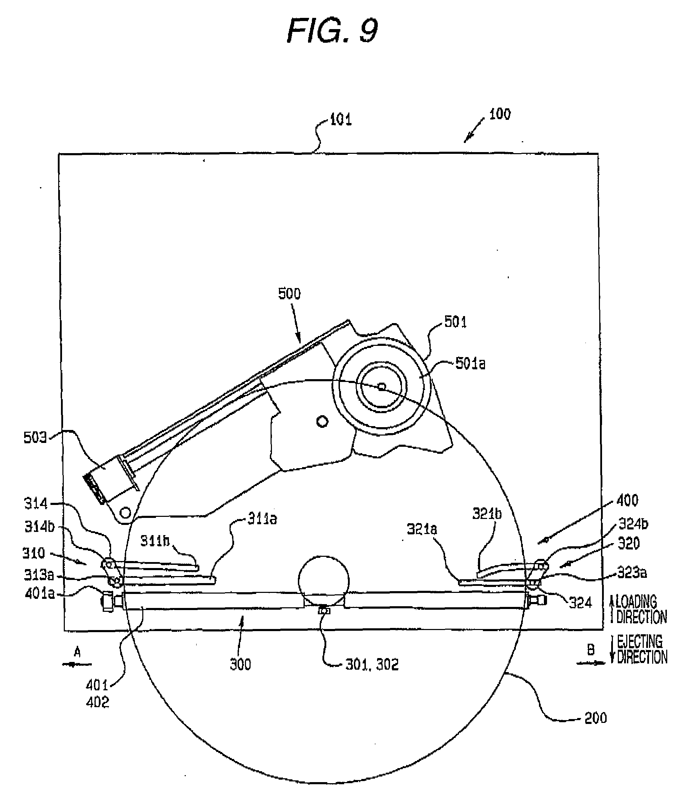

When the auto loading of the disc 200 is continued, the disc 200 contacts the disc contacting lever members 314, 324 to slide the disc contacting lever member 314 in the A direction in Figures and slide the disc contacting lever member 324 in the B direction in Figures. Thus, the disc detecting lever member 313 is slid in the A direction in Figures, and the disc detecting lever member 323 is slid in the B direction in Figures. Accordingly, output levels of the position sensors 312, 322 are increased. As shown in FIG.9, the output levels of the position sensors 312, 322 become a maximum in a state that a portion of the disc 200 of a maximum diameter contacts the disc contacting lever members 314, 324. Also, the guide grooves 311a, 311b of the guide member 311 and the guide grooves 321a, 321b of the guide member 321 are shaped such that the disc contacting lever members 314, 324 are moved in substantially parallel with the loading direction or the ejecting direction in Figures in a state that a portion of the disc 200 of a maximum diameter contacts the disc contacting lever members 314, 324 in this manner,

This configuration can attain a space saving of the disc detecting portions 310, 320, particularly the disc contacting lever members 314, 324, and the guide member 311 and the guide member 321 in the lateral direction (the A direction or the B direction in Figures) of the device, and can realize a size reduction of the disc device 100.

When the disc 200 goes ahead, the contact between the disc 200 and the disc contacting lever members 314, 324 is released. Thus, the disc contacting lever members 314, 324 are held in the initial positions. Similarly, the disc detecting lever members 313, 323 are also held in the initial positions. Also, the output levels of the position sensors 312, 322 return to the initial positions.

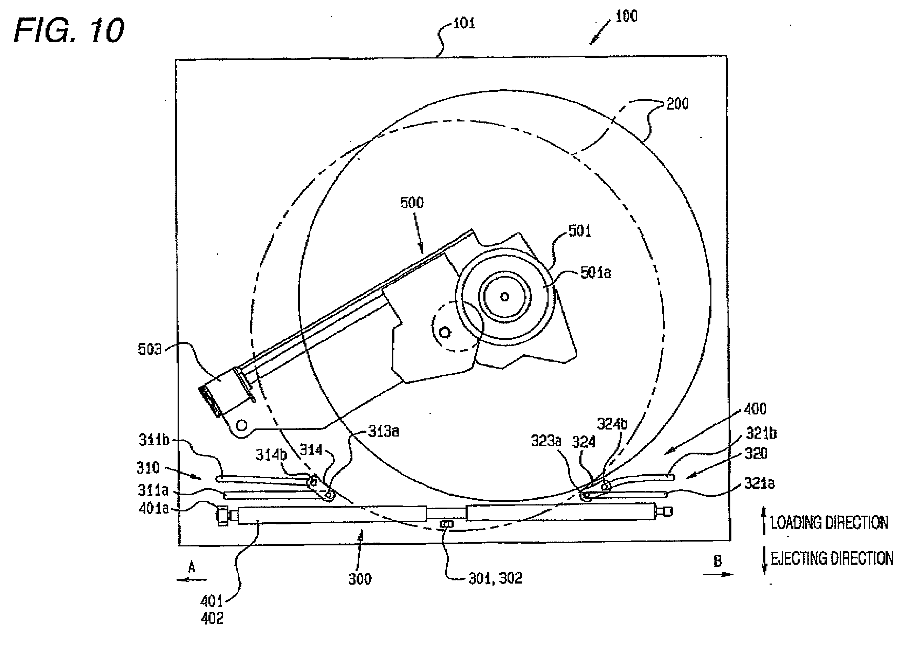

As shown in FIG.10, when the disc 200 goes further ahead, the holding of the disc 200 by the roller members 401, 402 is released. Also, a disc arrival detecting unit (not shown) detects that the disc 200 reaches the housing position, and stops the operation of the drive source (not shown), and thus the rotation of the roller member 401 is stopped. Then, the disc 200 is carried to the recording/playing position of the disc recording/playing device 500 by a mechanism (not shown), and is held on the turn table 501 a.

With the above operations, the loading operation of the disc 200 is completed, and then the disc device 100 goes to the recordable/playable state of the disc 200.

### (2) Ejecting operation of the disc 200

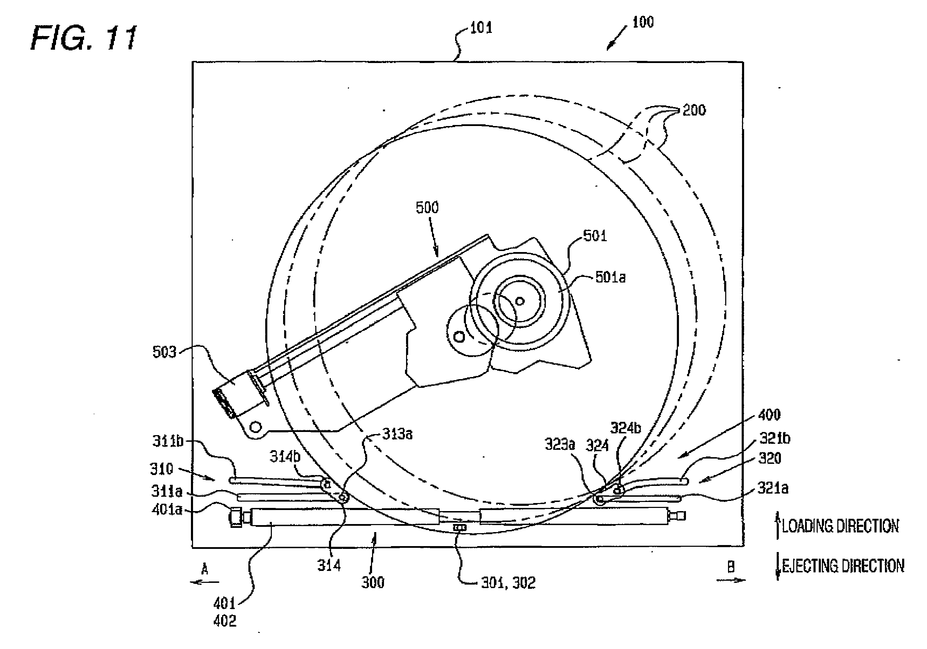

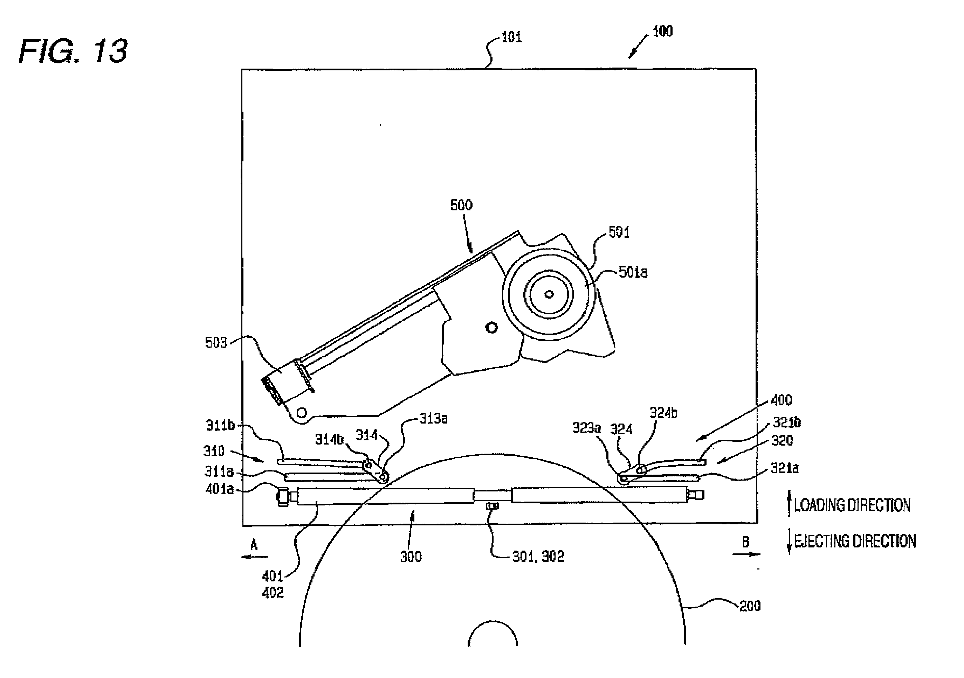

Next, the ejecting operation of the disc 200 by the disc device 100 will be explained with reference to FIG.11 to FIG.13 hereunder. As to the disc detecting portions 310, 320 in FIG.8 to FIG.10, only the guide grooves 311a, 311b of the guide member 311, the shaft member 313a of the disc detecting lever member 313, the disc contacting lever member 314, the guide grooves 321a, 321b of the guide member 321, the shaft member 323a of the disc detecting lever member 323, and the disc contacting lever member 324 are illustrated, and the illustration of other members will be omitted herein.

First, as shown in FIG.11, the holding of the disc 200 on the spindle motor 501 is released by a mechanism (not shown), and the ejecting operation of the disc 200 is started.

Then, the disc 200 is carried in the ejecting direction by the mechanism (not shown). The disc arrival detecting unit (not shown) detects that the disc 200 starts a movement in the ejecting direction, and starts the operation of the drive source (not shown). Thus, the rotation of the roller member 401 is started.

Then, when the disc 200 is carried to the roller members 401, 402 side by the mechanism (not shown), such disc 200 comes into contact with the roller members 401, 402 and is put between the roller members 401, 402. Thus, the ejecting operation of the disc 200 by the roller member 401 is started.

Then, when the disc 200 is carried in the ejecting direction by the roller member 401, such disc 200 comes into contact with the disc contacting lever members 314, 324. Thus, the disc contacting lever member 314 and the disc detecting lever member 313 are caused to slide in the A direction in Figures and also the disc contacting lever member 324 and the disc detecting lever member 323 are caused to slide in the B direction in Figures.

Then, as shown in FIG.11 to FIG.13, the disc 200 goes forward in the ejecting direction at an opposite timing to that in the loading operation. Thus, the disc 200 is carried to an ejection completing position.

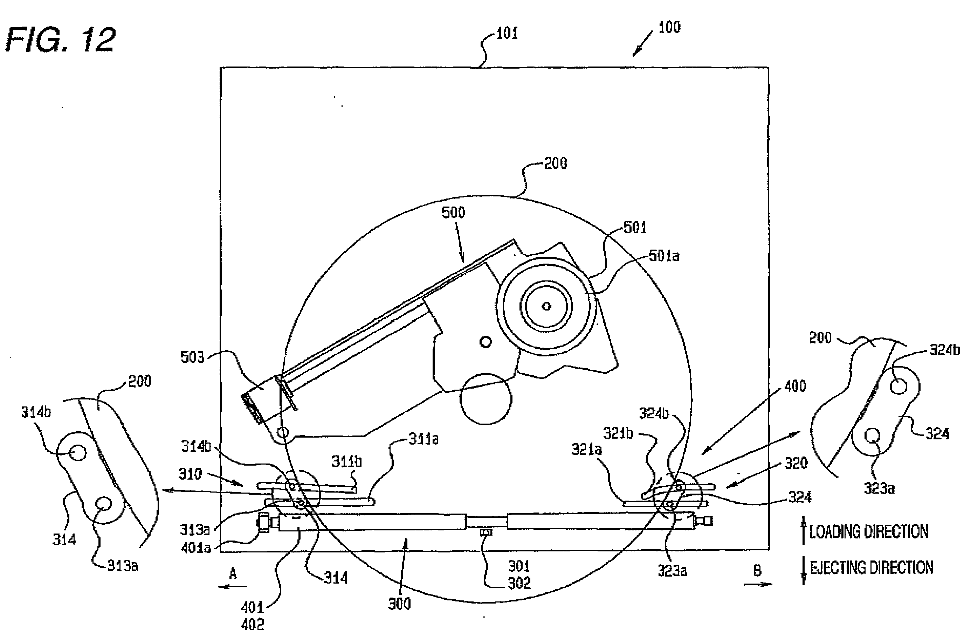

At this time, as shown in FIG.12, the guide grooves 311a, 311b of the guide member 311, the disc detecting lever member 313, and the disc contacting lever member 314 are constructed such that the disc 200 contacts the disc contacting lever member 314 at a plurality of points, from a position where the disc 200 starts to contact the disc contacting lever member 314 to a position where at least the disc 200 projects from the case 101.

Also, as shown in FIG.12, the guide grooves 321a, 321b of the guide member 321, the disc detecting lever member 323, and the disc contacting lever member 324 are constructed such that the disc 200 contacts the disc contacting lever member 324 at a plurality of points, from a position where the disc 200 starts to contact the disc contacting lever member 324 to a position where at least the disc 200 projects from the case 101.

Here, the ejection completion of the disc 200 is detected by the light receiving element 302, the position sensor 312 or 322, the detecting unit (not shown), or the like.

With the above operations, the ejecting operation of the disc 200 is completed.

### (3) Operation of the disc 200 having a disc cutout portion 200c

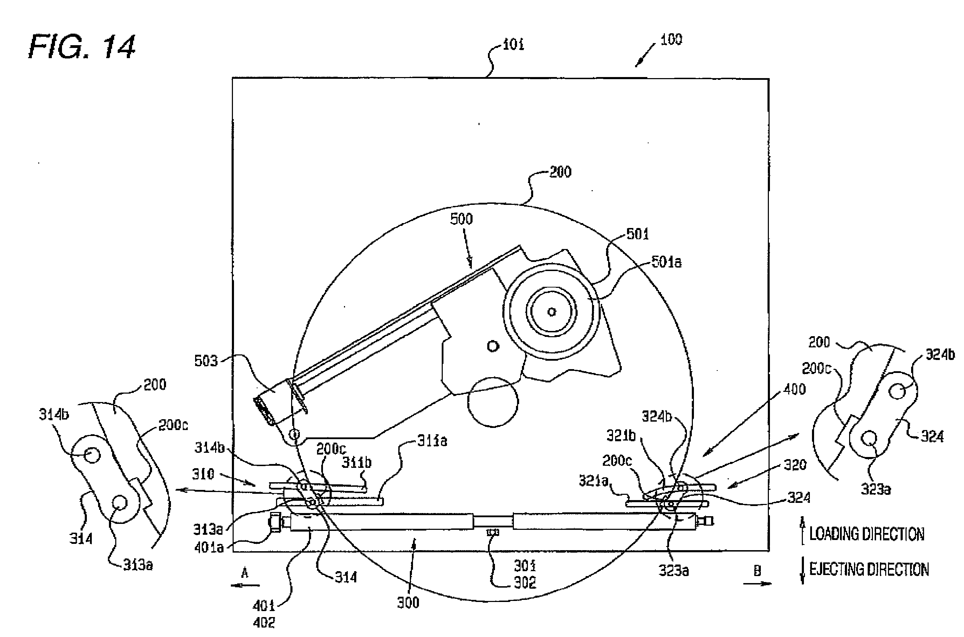

Next, an ejecting operation of the disc device 100 executed when the disc 200 having a disc cutout portion 200c is inserted will be explained with reference to FIG.14 hereunder.

Here, when the disc cutout portion 200c does not come into contact with the disc contacting lever members 314, 324, the ejecting operation is similar to the ejecting operation of the normal disc 200 in above (2), and therefore their explanation will be omitted herein.

Next, the case where the ejecting operation of the disc 200 is executed in the position where the disc cutout portion 200c comes into contact with the disc contacting lever member 314 or 324 will be explained hereunder.

First, as described above, the holding of the disc 200 on the spindle motor 501 is released by the mechanism (not shown), and then the ejecting operation of the disc is started.

Then, the disc 200 is carried in the ejecting direction by the mechanism (not shown), and also a start of movement of the disc 200 in the ejecting direction is detected by the disc arrival detecting unit (not shown). Thus, the operation of the drive source (not shown) is started to start the rotation of the roller member 401.

When the disc 200 is carried further toward the roller members 401, 402 side by the mechanism (not shown), the disc 200 comes into contact with the roller members 401, 402 and then is put between the roller members 401, 402. Thus, the ejecting operation of the disc 200 by the roller member 401 is started.

Then, when the disc 200 is carried in the ejecting direction by the roller member 401, such disc 200 comes into contact with the disc contacting lever members 314, 324. Thus, the disc contacting lever member 314 and the disc detecting lever member 313 are caused to slide in the A direction in Figures and also the disc contacting lever member 324 and the disc detecting lever member 323 are caused to slide in the B direction in Figures.

Then, as shown in FIG.14, the disc cutout portion 200c of the disc 200 comes into contact with the disc contacting lever member 314 or 324.

At this time, as shown in FIG.14, the guide grooves 311a, 311b of the guide member 311, the disc detecting lever member 313, and the disc contacting lever member 314 are constructed such that the disc 200 contacts the disc contacting lever member 314 at a plurality of points, from a position where the disc 200 starts to contact the disc contacting lever member 314 to a position where at least the disc 200 projects from the case 101. Therefore, this arrangement can reduce such a chance that the disc contacting lever member 314 enters into the disc cutout portion 200c of the disc 200. As a result, this function can reduce the possibility that the sliding operation of the disc detecting lever member 393 or the disc contacting lever member 314 is stopped, so that the stable disc ejecting operation of the defective disc 200 having the disc cutout portion 200c can be carried out.

Similarly, as shown in FIG.14, the guide grooves 321a, 321b of the guide member 321, the disc detecting lever member 323, and the disc contacting lever member 324 are constructed such that the disc contacting lever member 324 is caused to contact the disc 200 at a plurality of points, from a position where the disc 200 starts to contact the disc contacting lever member 324 to a position where at least the disc 200 projects from the case 101. Therefore, this arrangement can reduce such a chance that the disc contacting lever member 324 enters into the disc cutout portion 200c of the disc 200. As a result, this function can reduce the possibility that the sliding operation of the disc detecting lever member 323 or the disc contacting lever member 324 is stopped, so that the stable disc ejecting operation of the defective disc 200 having the disc cutout portion 200c can be carried out.

As described above, the simple mechanism consisting of two guide grooves 311a, 311b and 321a, 321b a distance between which is changed gradually respectively and the disc contacting lever members 314, 324 engaging with the guide grooves respectively enables the disc 200 to contact the disc contacting lever members 314, 324 at a plurality of points, from a position where the disc 200 starts to contact the disc contacting lever members 314, 324 to a position where at least the disc 200 projects from the case 101. Therefore, even when the defective disc 200 having the disc cutout portion 200c on its outer shape, or the like is inserted into the device, this arrangement can reduce such a chance that the disc contacting portions of the disc contacting lever members 314, 324 enter into the disc cutout portion 200c, and also makes it possible to carry out the stable disc ejecting operation of the defective disc 200 having the disc cutout portion 200c. Also, the guide grooves 311a, 311b of the guide member 311 and the guide grooves 321a, 321b of the guide member 321 are shaped such that the disc contacting lever members 314, 324 are moved in substantially parallel with the loading direction or the ejecting direction in Figures in a state that the portion of the disc 200 of a maximum diameter comes into contacts with the disc contacting lever members 314, 324. This configuration can attain a space saving of the disc detecting portions 310, 320, particularly the disc contacting lever members 314, 324, and the guide member 311 and the guide member 321 in the lateral direction (the A direction or the B direction in Figures) of the device, and can realize a size reduction of the disc device 100.

Also, since the electronic device in which the disc device 100 of the first embodiment of the present invention is built has the configuration explained above, such electronic device can carry out the stable disc ejecting operation of the defective disc 200 having the disc cutout portion 200c. Also, such electronic device can attain a space saving of the disc device 100, and can realize a size reduction of the electronic device.

In the above first embodiment, the loading or the ejection of the disc 200 is executed by rotating the roller member 401 by a power source (not shown). In this case, according to the present invention, such a configuration may be employed that the loading or the ejection of the disc 200 is executed by rotating the roller member 402 by the power source (not shown).

Also, in the first embodiment, the disc 200 is inserted into the device such that the recording face 200a is directed downward (the D direction in Figures). In this case, according to the present invention, such a configuration may be employed that the disc recording/playing device 500 is arranged upside down with respect to the disc 200 and thus the disc 200 is inserted to direct the recording face 200a upward (the C direction in Figures).

Also, in the first embodiment, an amount of slide of the disc detecting lever members 313, 323 in the lateral direction (the A direction or the B direction in Figures) of the device is detected by the position sensors 312, 322. But such a configuration may be employed that a slide starting position and a maximum amount of slide of the disc detecting lever members 313, 323 in the lateral direction (the A direction or the B direction in Figures) of the device are detected by a push switch and the light emitting element and the light receiving element.

Also, in the first embodiment, the disc detecting lever members 313, 323 are slid in the lateral direction (the A direction or the B direction in Figures) of the device, and an amount of slide of the disc detecting lever members 313, 323 is detected by the position sensors 312, 322. But such a configuration may be employed that the disc detecting lever members 313, 323 are turned with respect to the case 101 and an amount of turn of the disc detecting lever members 313, 323 is detected by a rotary position sensor, for example.

### (Second Embodiment)

Next, a disc device 100B according to a second embodiment of the present invention will be explained hereunder.

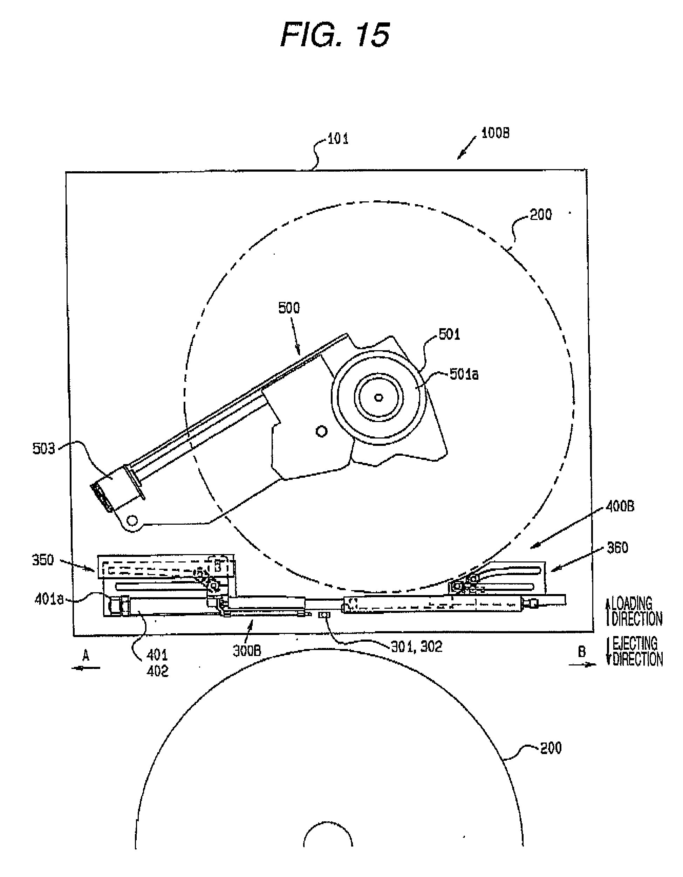

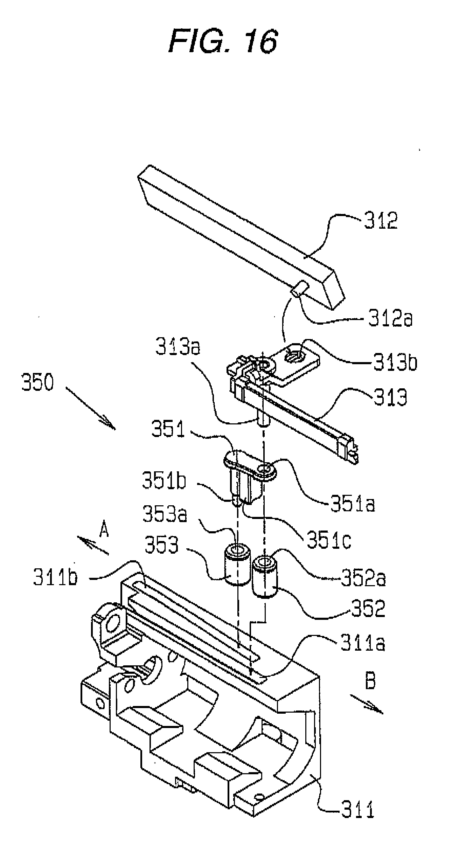

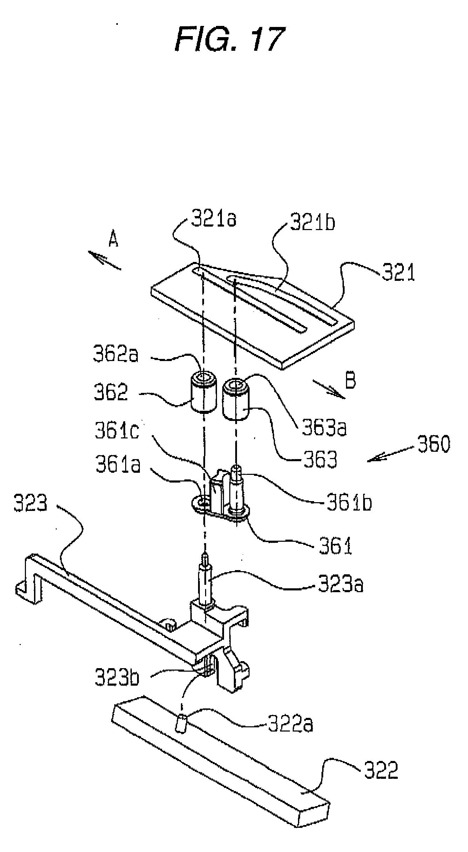

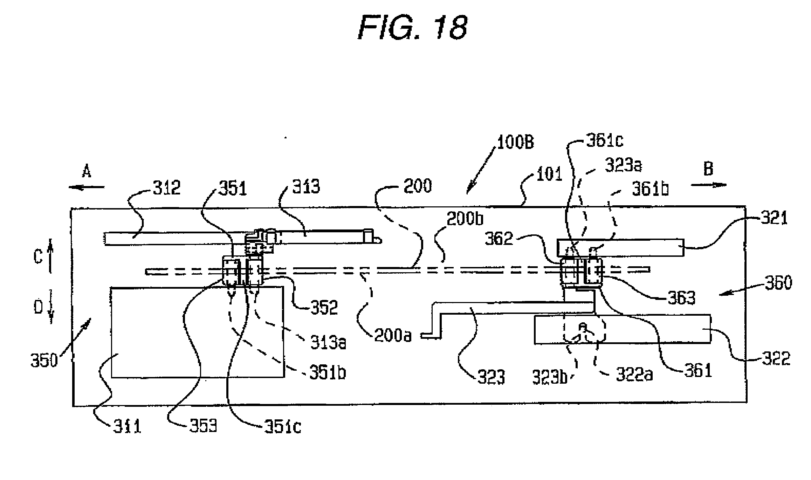

FIG.15 is a top view of a pertinent portion of a disc device of a second embodiment of the present invention, FIG.16 is an exploded perspective view of a pertinent portion of a disc detecting portion in the second embodiment of the present invention, FIG. 17 is an exploded perspective view of another pertinent portion of the disc detecting portion in the second embodiment of the present invention, and FIG.18 is a front view of a pertinent portion of the disc detecting portion in the second embodiment of the present invention. In this case, the same reference symbols are affixed to the portions common to those in the first embodiment, and their redundant explanation will be omitted.

In the disc device 100B according to the second embodiment, in FIC.15, a disc detecting device 300B and a disc loading/ ejecting device 400B are provided to the interior of the case 101 of the disc device 100B. This disc detecting device 300B detects a position and a size of the disc 200 inserted into the disc device 100B. This disc loading/ejecting device 400B executes the disc loading/ejecting operation based on the detected result of the disc detecting device 300B.

Next, the disc detecting device 300B will be explained hereunder.

In FIG.15 to FIG. 18, a disc detecting portion 350 is provided near the disc slot 101a of the case 101 on the backward side (the loading direction in Figures) of the roller members 401, 402 and on the left side (the A direction in Figures) of the disc device 100B. This disc detecting portion 350 detects a position and a size of the disc 200 when the disc 200 is inserted into the interior of the disc device 100B. Similarly, a disc detecting portion 360 is provided near the disc slot 101a of the case 101 on the backward side (the loading direction in Figures) of the roller members 401, 402 and on the right side (the B direction in Figures) of the disc device 100B. Also, this disc detecting portion 360 detects a position and a size of the disc 200 when the disc 200 is inserted into the interior of the disc device 100B.

Next, the disc detecting portions 350, 360 will be explained hereunder.

In FIG.16 and FIG.18, the disc detecting portion 350 is constructed by the guide member 311 having the guide grooves 311a, 311b, the position sensor 312 having the shaft member 312a, the disc detecting lever member 313 having the shaft member 313a and the slit 313b, a disc contacting lever member 351 having a hole 351a, a shaft member 351b, and a disc regulating portion 351c, a roller member 352 having a hole 352a at the center, and a roller member 353 having a hole 353a at the center.

The shaft member 313a of the disc detecting lever member 313 passes through the hole 351a of the disc contacting lever member 351 and the hole 352a of the roller member 352, and engages with the guide groove 311a of the guide member 311. Also, a guiding unit (not shown) other than the shaft member 313a and the guide groove 311 a is provided between the disc detecting lever member 313 and the case 101. The disc detecting lever member 313 is provided slidably in the lateral direction (the A direction or the B direction in Figures) of the case 101.

Also, the shaft member 351b of the disc contacting lever member 351 passes through the hole 353a of the roller member 353, and engages with the guide groove 311b of the guide member 311. Also, the guide groove 311a and the guide groove 311b of the guide member 311 are not arranged in parallel, but they are arranged such that a distance between the guide groove 311a and the guide groove 311b is changed gradually, i,e., a distance between the guide groove 311a and the guide groove 311b is not set constant. Accordingly, the disc contacting lever member 351 can slide in the lateral direction (the A direction or the B direction in Figures) with respect to the case 101 and can turn around the shaft member 313a of the disc detecting lever member 313 as a pivot. Also, the roller member 352 can rotate on the shaft member 313a of the disc detecting lever member 313 as the rotation shaft. Similarly, the roller member 353 can rotate on the shaft member 351b of the disc contacting lever member 351.

In this case, in a positional relationship between the guide member 311 and the disc detecting lever member 313, one member is provided in a higher position than the disc slot 101 a and the other member is provided in a lower position than the disc slot 101a. Therefore, heights of respective members are set such that only the roller member 352, the roller member 353, and the disc regulating portion 351c of the disc contacting lever member 351 provided between the guide member 311 and the disc detecting lever member 313 contacts the disc 200 inserted into the device.

Accordingly, when the disc 200 is inserted into the disc slot 101a, the outer peripheral surface of the disc 200 is brought into contacts with any one of the roller member 352, the roller member 353, and the disc regulating portion 351c of the disc contacting lever member 351, and then the disc contacting lever member 351 is slid outward (the A direction in Figures). The disc detecting lever member 313 is slid outward (the A direction in Figures) in response to the slide of the disc contacting lever member 351. Then, an amount of slide of the disc detecting lever member 313 is detected by the position sensor 312.

Also, positional relationships among the roller member 352, the roller member 353, and the disc regulating portion 351c of the disc contacting lever member 351 are given such that the roller members 352, 353 continue the contact with the disc 200 while rotating on the shaft member 313a of the disc detecting lever member 313 and the shaft member 351b of the disc contacting lever member 351 as the rotating shaft respectively in a situation that the disc 200 as the normal disc contacts the roller members 352, 353, and also the disc contacting lever member 351 is shaped to have a clearance between the disc regulating portion 351c of the disc contacting lever member 351 and the outer peripheral surface of the disc 200. Here, the normal disc denotes the disc that has no cutout (dent) on its periphery of the disc.

in other words, the disc regulating portion 351c of the disc contacting lever member 351 does not come into contact with the normal disc, but acts as the disc regulating member for preventing such a situation that the cutout portion of the disc enters between the roller members 352, 353 when the defective disc having the cutout (dent) on its periphery of the disc, or the like is inserted into the device.

In FIG.17 and FIG.18, the disc detecting portion 360 is constructed by the guide member 321 having the guide grooves 321a, 321b, the position sensor 322 having the shaft member 322a, the disc detecting lever member 323 having the shaft member 323a and the slit 323b, a disc contacting lever member 361 having a hole 361a, a shaft member 361b, and a disc regulating portion 361c, a roller member 362 having a hole 362a at the center, and a roller member 363 having a hole 363a at the center.

The shaft member 323a of the disc detecting lever member 323 passes through the hole 361a of the disc contacting lever member 361 and the hole 362a of the roller member 362, and engages with the guide groove 321a of the guide member 321. Also, a guiding unit (not shown) other than the shaft member 323a and the guide groove 321a is provided between the disc detecting lever member 323 and the case 101. The disc detecting lever member 323 is provided slidably in the lateral direction (the A direction or the B direction in Figures) of the case 101.

Also, the shaft member 361b of the disc contacting lever member 361 passes through the hole 363a of the roller member 363, and engages with the guide groove 321b of the guide member 321. Also, the guide groove 321a and the guide groove 321b of the guide member 321 are not arranged in parallel, but they are arranged such that a distance between the guide groove 321a and the guide groove 321b is changed gradually, i.e., a distance between the guide groove 321a and the guide groove 321b is not set constant. Accordingly, the disc contacting lever member 361 can slide in the lateral direction (the A direction or the B direction in Figures) with respect to the case 101 and can turn around the shaft member 323a of the disc detecting lever member 323 as a pivot. Also, the roller member 362 can rotate on the shaft member 323a of the disc detecting lever member 323 as the rotation shaft. Similarly, the roller member 363 can rotate on the shaft member 361b of the disc contacting lever member 361.

In this case, in a positional relationship between the guide member 321 and the disc detecting lever member 323, one member is provided in a higher position than the disc slot 101a and the other member is provided in a lower position than the disc slot 101a. Therefore, heights of respective members are set such that only the roller member 362, the roller member 363, and the disc regulating portion 361c of the disc contacting lever member 361. provided between the guide member 321 and the disc detecting lever member 323 contacts the disc 200 inserted into the device.

Accordingly, when the disc 200 is inserted into the disc slot 101a, the outer peripheral surface of the disc 200 is brought into contacts with any one of the roller member 362, the roller member 363, and the disc regulating portion 361c of the disc contacting lever member 361, and then the disc contacting lever member 361 is slid outward (the B direction in Figures). The disc detecting lever member 323 is slid outward (the B direction in Figures) in response to the slide of the disc contacting lever member 361. Then, an amount of slide of the disc detecting lever member 323 is detected by the position sensor 322.

Also, positional relationships among the roller member 362, the roller member 363, and the disc regulating portion 361c of the disc contacting lever member 361 are given such that the roller members 362, 363 continue the contact with the disc 200 while rotating on the shaft member 323a of the disc detecting lever member 323 and the shaft member 361b of the disc contacting lever member 361 as the rotating shaft respectively in a situation that the disc 200 as the normal disc contacts the roller members 362, 363, and also the disc contacting lever member 361 is shaped to have a clearance between the disc regulating portion 361c of the disc contacting lever member 361 and the outer peripheral surface of the disc 200. Here, the normal disc denotes the disc that has no cutout (dent) on its periphery of the disc.

In other words, the disc regulating portion 361c of the disc contacting lever member 361 does not come into contact with the normal disc, but acts as the disc regulating member for preventing such a situation that the cutout portion of the disc enters between the roller members 362, 363 when the defective disc having the cutout (dent) on its periphery of the disc, or the like is inserted into the device.

Here, remaining configurations of the second embodiment are similar to those in the first embodiment of the present invention, and therefore explanation of the configuration of the disc device 100B will be omitted herein.

Next, loading/ejecting operations of the disc 200 will be explained hereunder.

### (1) Loading operation of the disc 200

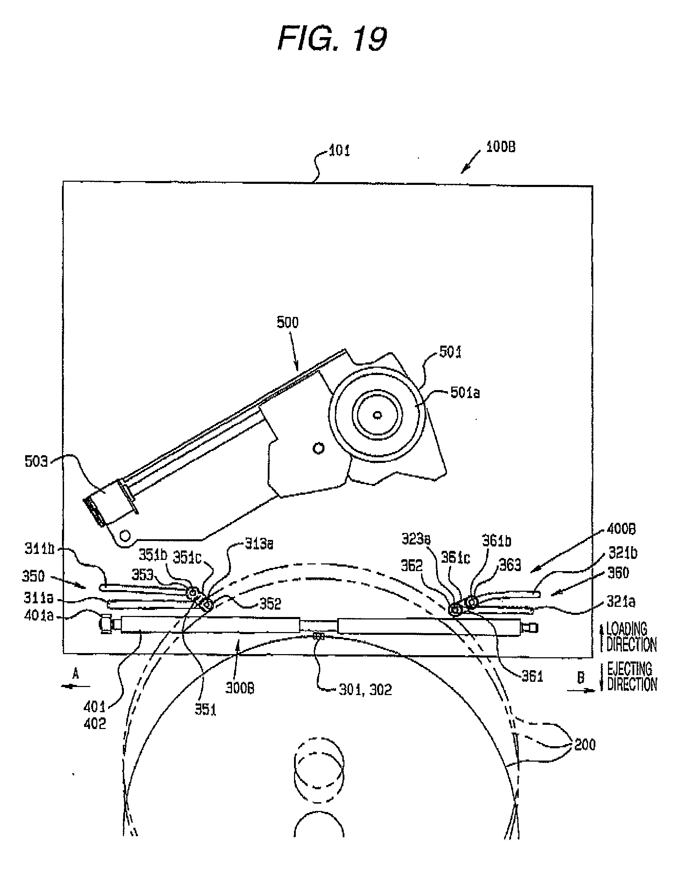

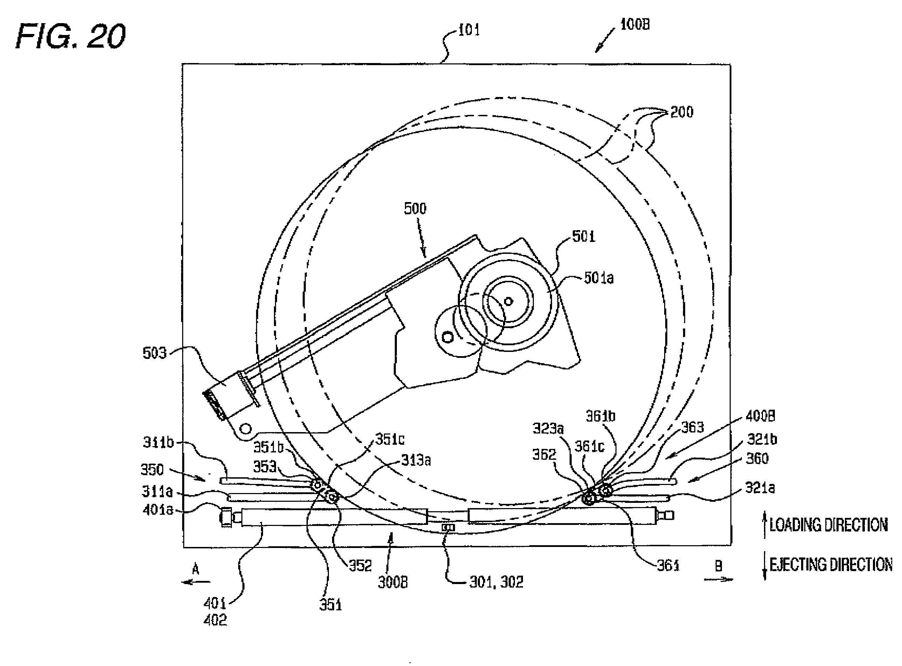

First, the loading operation of the disc 200 by the disc device 100B will be explained with reference to FIG.19, FIG.20 hereunder. As to the disc detecting portions 350, 360 in FIG.19 and FIG.20, only the guide grooves 311a, 311b of the guide member 311, the shaft member 313a of the disc detecting lever member 313, the disc contacting lever member 351, the roller members 352, 353, the guide grooves 321a, 321b of the guide member 321, the shaft member 323a of the disc detecting lever member 323, the disc contacting lever member 361, and the roller members 362, 363 are illustrated, and the illustration of other members will be omitted herein.

As shown in FIG,19, when the auto loading of the disc 200 is started, the disc 200 comes into contact with the roller members 352, 362. Therefore, the disc contacting lever members 351, 361 are slid in the A direction in Figures and the B direction in Figures respectively, and also the roller members 352, 362 continue to contact with the disc 200 while rotating around the shaft member 313a of the disc detecting lever member 313 and the shaft member 323a of the disc detecting lever member 323 as the rotating shaft respectively. As a result, the disc detecting lever member 313 is slid in the A direction in Figures and the disc detecting lever member 323 is slid in the B direction in Figures, so that output levels of the position sensors 312,322 are changed.

Also, the guide grooves 311e, 311b of the guide member 311 and the guide grooves 321a, 321b of the guide member 321 are shaped such that the disc contacting lever members 351, 361 are moved in substantially parallel with the loading direction or the ejecting direction in Figures in a state that the disc 200 goes further forward and a portion of the disc 200 of a maximum diameter contacts the disc contacting lever members 314, 324.

This configuration can attain a space saving of the disc contacting lever members 351, 361, the guide member 311, and the guide member 321 in the lateral direction (the A direction or the B direction in Figures) of the device, and can realize a size reduction of the disc device 100B.

In this case, remaining configurations and operations of the disc device in the second embodiment are similar to those in the first embodiment of the present invention, and therefore explanation of the operation of the disc device 100B will be omitted herein,

### (2) Ejecting operation of the disc 200

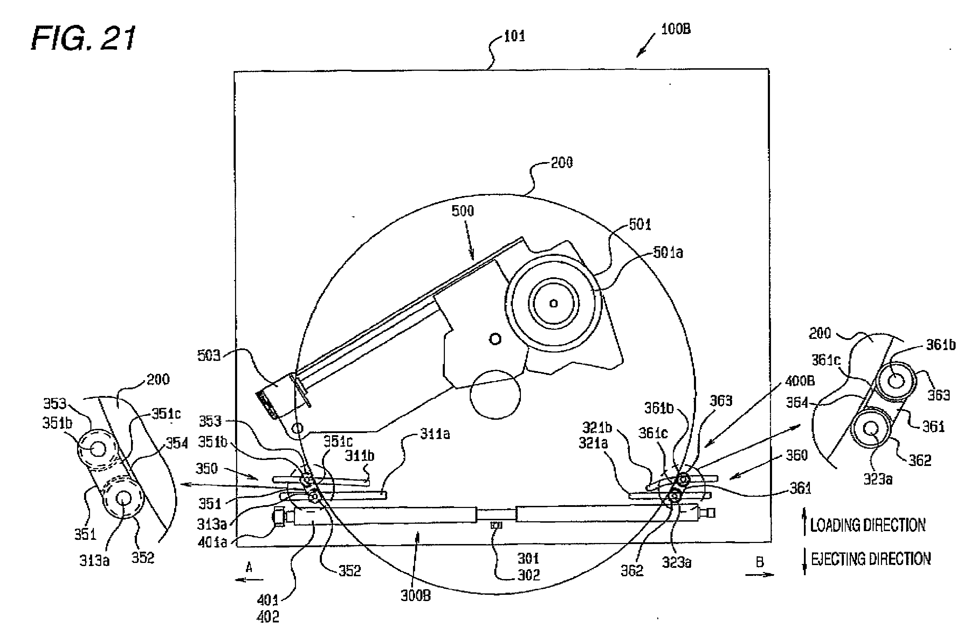

Then, an ejecting operation of the disc 200 by the disc device 1008 will be explained with reference to FIG.20 and FIG.21 hereunder. As to the disc detecting portions 350, 360 in FIG.20 and FIG.21, only the guide grooves 311a, 311b of the guide member 311, the shaft member 313a of the disc detecting lever member 313, the disc contacting lever member 351, the roller members 352, 353, the guide grooves 321a, 321b of the guide member 321, the shaft member 323a of the disc detecting lever member 323, the disc contacting lever member 361, and the roller members 362, 363 are illustrated, and the illustration of other members will be omitted herein.

When the disc 200 is carried in the ejecting direction by the roller member 401, such disc 200 comes into contact with the roller members 352, 353, 362, 363. Thus, the disc 200 causes the disc contacting lever members 351 and 361 to slide in the A direction and the B direction in Figures respectively, and also the roller members 352, 362 continue to contact the disc 200 while rotating on the shaft member 313a of the disc detecting lever member 313 and the shaft member 323a of the disc detecting lever member 323 as the rotating shaft respectively. Similarly, the roller members 353, 363 continue to contact the disc 200 while rotating on the shaft member 351b of the disc contacting lever member 351 and the shaft member 361 b of the disc contacting lever member 361 as the rotating shaft respectively, Accordingly, the disc detecting lever member 313 is slid in the A direction in Figures and the disc detecting lever member 323 is slid in the B direction in Figures, and thus the output levels of the position sensors 312, 322 are changed.

Then, as shown in FIG.20 and FIG.21, the disc 200 goes forward in the ejecting direction at an opposite timing to that in the loading operation. Thus, the disc 200 is carried to an ejection completing position.

At this time, as shown in FIG.21, the guide grooves 311a, 311b of the guide member 311, the disc detecting lever member 313, and the disc contacting lever member 351 are constructed such that the disc 200 is caused to contact the roller members 352, 353 at a plurality of points, from a position where the disc 200 starts to contact the roller members 352, 353 to a position where at least the disc 200 projects from the case 101.

Also, the disc contacting lever member 351 is shaped such that a clearance 354 exists between the disc regulating portion 351c of the disc contacting lever member 351 and the outer peripheral surface of the disc 200 in a situation that the disc 200 comes into contact with the roller members 352, 353 when the normal disc is used as the disc 200. Here, the normal disc denotes the disc that has no cutout (dent) on its periphery of the disc.

Similarly, as shown in FIG.21, the guide grooves 321a, 321b of the guide member 321, the disc detecting lever member 323, and the disc contacting lever member 361 are constructed such that the disc 200 is caused to contact the roller members 362, 363 at a plurality of points, from a position where the disc 200 starts to contact the roller members 362, 363 to a position where at least the disc 200 projects from the case 101.

Also, the disc contacting lever member 361 is shaped such that a clearance 364 exists between the disc regulating portion 361 c of the disc contacting lever member 361 and the outer peripheral surface of the disc 200 in a situation that the disc 200 comes into contact with the roller members 362, 363 when the normal disc is used as the disc 200. Here, the normal disc denotes the disc that has no cutout (dent) on its periphery of the disc.

In this case, remaining configurations and operations of the disc device in the second embodiment are similar to those in the first embodiment of the present invention, and therefore explanation of the operation of the disc device 100B will be omitted herein.

### (3) Operation of the disc 200 having the disc cutout portion 200c

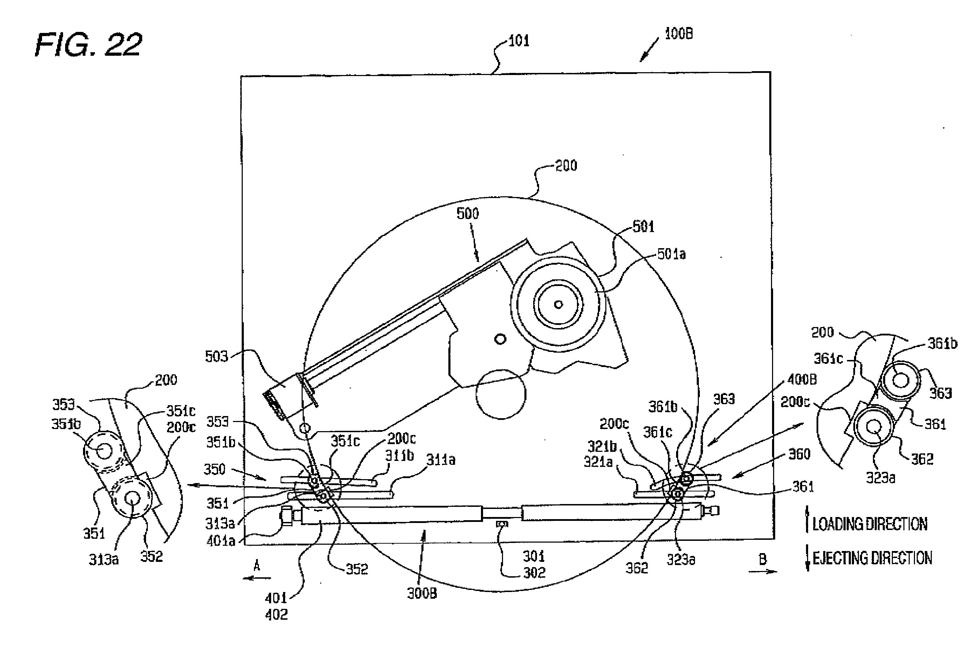

Next, the ejecting operation of the disc device 100B executed when the disc 200 having the disc cutout portion 200c is inserted will be explained with reference to FIG.22 hereunder.

Here, the operation executed when the disc cutout portion 200c does not come into contact with the roller members 352, 353, 362, 363 is similar to the ejecting operation of the normal disc 200 described above in (2), and therefore its explanation will be omitted herein.

Then, the case where the ejecting operation of the disc 200 is executed when the disc cutout portion 200c is positioned to contact either of the roller members 352, 353, 362, 363 will be explained hereunder.

When the disc 200 is carried in the ejecting direction by the roller member 401, such disc 200 comes into contact with the roller members 352, 353, 362, 363. Thus, the disc 200 causes the disc contacting lever members 351 and 361 to slide in the A direction and the B direction in Figures respectively, and also the roller members 352, 362 continue to contact the disc 200 while rotating on the shaft member 313a of the disc detecting lever member 313 and the shaft member 323a of the disc detecting lever member 323 as the rotating shaft respectively. Similarly, the roller members 353, 363 continue to contact the disc 200 while rotating on the shaft member 351b of the disc contacting lever member 351 and the shaft member 361b of the disc contacting lever member 361 as the rotating shaft respectively. Accordingly, the disc detecting lever member 313 is slid in the A direction in Figures and the disc detecting lever member 323 is slid in the B direction in Figures, and thus the output levels of the position sensors 312, 322 are changed.

Then, as shown in FIG.22, the disc cutout portion 200c of the disc 200 comes into contact with the roller members 352, 353, 362, 363, or the disc regulating portion 351c of the disc contacting lever member 351, or the disc regulating portion 361 c of the disc contacting lever member 361.

At this time, as shown in FIG.22, the guide grooves 311 a, 311 b of the guide member 311, the disc detecting lever member 313, and the disc contacting lever member 351 are constructed such that the disc 200 is caused to contact the roller members 352, 353 at a plurality of points, from a position where the disc 200 starts to contact the roller members 352, 353 or the disc regulating portion 351c of the disc contacting lever member 351 to a position where at least the disc 200 projects from the case 101, and also the disc regulating portion 351c is formed on the disc contacting lever member 351 to prevent such a situation that the disc cutout portion 200c of the disc 200 enters between the roller members 352, 353. Therefore, this arrangement can reduce such a chance that the roller members 352, 353 or the disc regulating portion 351c of the disc contacting lever member 351 enter into the disc cutout portion 200c of the disc 200. As a result, this function can reduce the possibility that the sliding operation of the disc contacting lever member 351 or the disc detecting lever member 313 is stopped, so that the stable disc ejecting operation of the defective disc 200 having the disc cutout portion 200c can be carried out.

Similarly, as shown in FIG.22, the guide grooves 321a, 321b of the guide member 321, the disc detecting lever member 323, and the disc contacting lever member 361 are constructed such that the disc 200 is caused to contact the roller members 362, 363 at a plurality of points, from a position where the disc 200 starts to contact the roller members 362, 363 or the disc regulating portion 361 c of the disc contacting lever member 361 to a position where at least the disc 200 projects from the case 101, and also the disc regulating portion 361c is formed on the disc contacting lever member 361 to prevent such a situation that the disc cutout portion 200c of the disc 200 enters between the roller members 362, 363. Therefore, this arrangement can reduce such a chance that the roller members 362, 363 or the disc regulating portion 361c of the disc contacting lever member 361 enter into the disc cutout portion 200c of the disc 200. As a result, this function can reduce the possibility that the sliding operation of the disc contacting lever member 361 or the disc detecting lever member 323 is stopped, so that the stable disc ejecting operation of the defective disc 200 having the disc cutout portion 200c can be carried out.

In this case, remaining configurations and operations of the disc device in the second embodiment are similar to those in the first embodiment of the present invention, and therefore explanation of the operation of the disc device 100B will be omitted herein.

As described above, such a configuration that portions contacting the disc 200 consist of the rotatable roller members 352, 353, 362, 363 and the disc regulating portions 351c, 361c, as well as the simple mechanism consisting of two guide grooves 311a, 311b and 321a, 321b a distance between which is changed gradually respectively and the disc contacting lever members 351, 361 engaging with the guide grooves, enables the disc 200 to contact either the roller members 352, 353, 362, 363 or the disc regulating portions 351c, 361c of the disc contacting lever members 351, 361 at a plurality of points, from a position where the disc 200 starts to contact either the roller members 352, 353, 362, 363 or the disc regulating portions 351c, 361c of the disc contacting lever members 351, 361 to a position where at least the disc 200 projects from the case 101. Therefore, even when the defective disc 200 having the disc cutout portion 200c on its outer shape, or the like is inserted into the device, this arrangement can reduce such a chance that the roller members 352, 353, 362, 363 or the disc regulating portions 351c, 361c of the disc contacting lever members 351, 361 enter into the disc cutout portion 200c, and also makes it possible to carry out the stable disc ejecting operation of the defective disc 200 having the disc cutout portion 200c.

### (4) Operation of the disc 200 having an adhesive agent 200d on an outer peripheral surface of the disc

Next, the operation of the disc device 100B executed when the disc 200 having the adhesive agent 200d on the outer peripheral surface of the disc is inserted will be explained hereunder.

The adhesive agent 200d is used in pasting DVD discs together to form the double-layered DVD disc, in pasting CD and DVD discs together, or the like. The defective disc from the outer peripheral surface of which the adhesive agent 200d protrudes exists on rare occasions.

In such a situation that the adhesive agent 200d has still a viscosity in a disc completed state and that the member contacting the disc does not rotate on the outer peripheral surface of the disc, a force that is extremely larger than a normal frictional force required to slide on the outer peripheral surface of the disc is needed to cause the member contacting the adhesive agent 200d to slide on the adhesive agent 200d.

Here, the loading operation or the ejecting operation of the disc device 100B executed when the disc 200 having the adhesive agent 200d on the outer peripheral surface of the disc is inserted are similar to those described above in (1) and (2), and therefore their explanation will be omitted herein.

During the former half of the loading operation of the disc 200 having the adhesive agent 200d on the outer peripheral surface of the disc into the disc device 100B or the latter half of the ejecting operation of the disc 200 having the adhesive agent 200d from the disc device 100B (the position in which the disc 200 projects from the case 101), the adhesive agent 200d on the outer peripheral surface of the disc 200 comes into contact with the roller members 352, 362. At this time, since the roller members 352, 362 continues to contact the disc while causing the adhesive agent 200d portion on the outer peripheral surface of the disc to rotate on the shaft members 313a, 323a of the disc detecting lever members 313, 323 as the rotating shaft, a frictional force between the adhesive agent 200d on the outer peripheral surface of the disc and the roller members 352, 362 is never extremely increased. As a result, this function can reduce the possibility that the sliding operation of the disc contacting lever member 351 and the disc detecting lever member 313 or the disc contacting lever member 361 and the disc detecting lever member 323 is stopped, so that the stable disc loading/ejecting operation of the defective disc 200 having the adhesive agent 200d on the outer peripheral surface of the disc can be carried out.

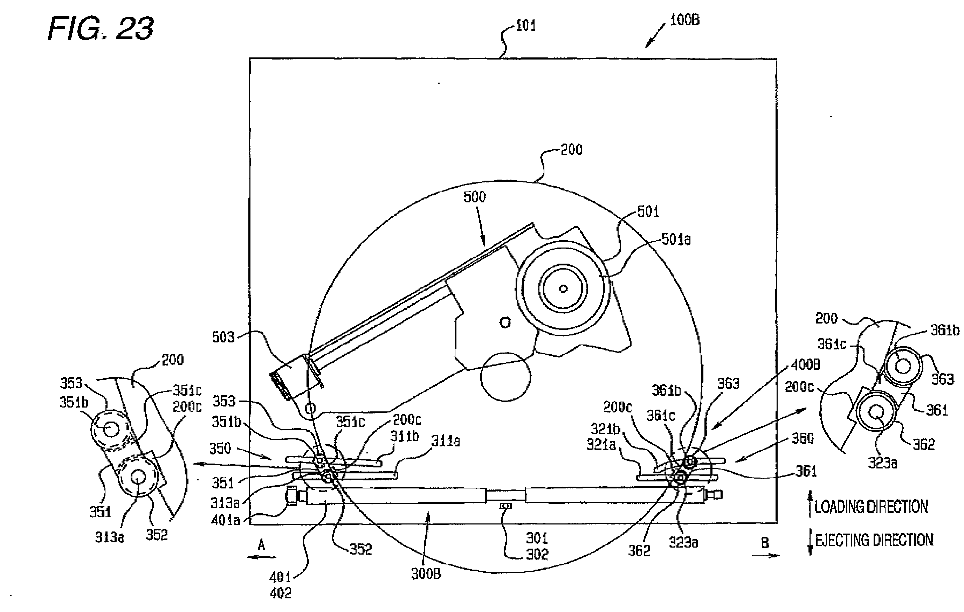

Also, as shown in FIG.23, the adhesive agent 200d on the outer peripheral surface of the disc comes into contact with the roller members 352, 353, 362, 363 at a plurality of points during the latter half of the loading operation of the disc 200 having the adhesive agent 200d on the outer peripheral surface of the disc or the former half of the ejecting operation of the disc 200 having the adhesive agent 200d, i.e., from a position where the disc 200 starts to contact the roller members 352, 353, 362, 363 to a position where at least the disc 200 projects from the case 101 at a time of ejecting. The roller members 352, 362 can rotate on the shaft members 313a, 323a of the disc detecting lever members 313, 323 as the rotation shaft, and also the roller members 353, 363 can rotate on the shaft members 351b, 361b of the disc contacting lever members 351, 361 as the rotation shaft. Also, since the clearances 354, 364 exist between the disc regulating portions 351c, 361c of the disc contacting lever members 351, 361 and the adhesive agent 200d on the outer peripheral surface of the disc in this state, the adhesive agent 200d on the outer peripheral surface of the disc never comes into contact with the disc regulating portions 351c, 361c as the non-rotated fixed member. According to this configuration, only the roller members 352, 353, 362, 363 continue to contact the disc while rotating the adhesive agent 200d portion on the outer peripheral surface of the disc, and therefore a frictional force between the adhesive agent 200d on the outer peripheral surface of the disc and the roller members 352, 353, 362, 363 is never extremely increased. As a result, this function can reduce the possibility that the sliding operation of the disc contacting lever member 351 and the disc detecting lever member 313 or the disc contacting lever member 361 and the disc detecting lever member 323 is stopped, so that the stable disc ejecting operation of the defective disc 200 having the adhesive agent 200d projected from the outer peripheral surface of the disc can be carried out.

As described above, such a configuration that portions contacting the disc 200 consist of the rotatable roller members 352, 353, 362, 363 and the disc regulating portions 351c, 361c being not rotated with respect to the disc contacting lever members 351, 361 are kept not to touch the disc 200, as well as the simple mechanism consisting of two guide grooves 311a, 311b and 321a, 321b a distance between which is changed gradually respectively and the disc contacting lever members 351, 361 engaging with the guide grooves respectively, enables the disc 200 having the adhesive agent 200d on the outer peripheral surface to contact only the rotatable roller members 352, 353, 362, 363 even when the defective disc 200 from the outer peripheral surface of which the adhesive agent 200d protrudes is inserted into the device. Therefore, this arrangement never increases extremely a frictional force between the outer peripheral surface of the disc and the adhesive agent 200d, and also makes it possible to carry out the stable disc ejecting operation of the defective disc 200 from the outer peripheral surface of which the adhesive agent 200d protrudes.

In this manner, because of the provision of the configuration explained above, the disc device 100B of the embodiment of the present invention makes it possible to carry out the stable disc ejecting operation of the defective disc 200 having the disc cutout portion 200c or the defective disc 200 from the outer peripheral surface of which the adhesive agent 200d protrudes. Also, this configuration can attain a space saving of the disc detecting portions 350, 360 in the lateral direction (the A direction or the B direction in Figures) of the device, and can realize a size reduction of the disc device 100B.

Also, because of the provision of the configuration explained above, the electronic device in which the disc device 100B of the embodiment of the present invention is built makes it possible to carry out the stable disc ejecting operation of the defective disc 200 having the disc cutout portion 200c or the defective disc 200 from the outer peripheral surface of which the adhesive agent 200d protrudes. Also, this configuration can attain a space saving of the disc device 100B, and can realize a size reduction of the electronic device.

In the second embodiment described above, two roller members 352, 353, 362, 363 and the disc regulating portions 351c, 361 c provided between two roller members to reduce a level difference between the roller members in the disc diameter direction are provided to the disc contacting lever members 351, 361 respectively. However, according to the present invention, any number of roller members in excess of two may be provided and any number of disc regulating portions may be provided between the roller members.

This application is based upon Japanese Patent Application (Patent Application No.2005-235754) filed on August 16, 2005; the contents of which are incorporated herein by reference.

With the above, various embodiments of the resent invention are explained. But the present invention is not limited to the matters set forth in the above embodiments, and variations and modifications made by those skilled in the art based on the description of the specification and the well known technologies are acceptable to the present invention and are contained in a scope over which a protection is sought.

### Industrial Applicability

As described above, the disc device according to the present invention has the configuration such that the disc contacting lever members that come into contact with the disc to be inserted and ejected and the disc detecting lever members for holding the disc contacting lever member movably with respect to the device are provided and the disc contacting lever members have a plurality of contact portions that contact the disc via a point contact. Therefore, the disc device according to the present invention possesses such an advantage that the disc device for capable of executing the stable disc ejecting operation by reducing such a chance that the disc contacting portion comes in the cutout (dent) portion of the disc even when the defective disc having the cutout (dent) on its outer shape, or the like is inserted into the device can be provided, and is useful to the disc device, or the like.

## Claims

1. A disc loading and ejecting device, comprising:
contacting lever members that come into contact with a disc to be loaded and ejected; and
detecting lever members that hold the contacting lever members movably with respect to the device,
wherein the contacting lever members have a plurality of contacting portions which contact the disc at point contacts, respectively.

2. The disc loading and ejecting device according to claim 1, wherein a contact state between the disc and the plurality of contacting portions is kept in ejecting the disc, from a position where the disc starts to contact the plurality of contacting portions to a position where at least the disc projects from the device.

3. The disc loading and ejecting device according to claim 1, wherein the detecting lever members are engaged with position sensors which detect a position of the disc respectively.

4. The disc loading and ejecting device according to claim 1, wherein the detecting lever members regulate a position of the disc.

5. The disc loading and ejecting device according to claim 1, wherein the plurality of disc contacting portions include at least a first contacting portion and a second contacting portion, and
wherein a first guiding portion for guiding a movement of the first contacting portion and a second guiding portion for guiding a movement of the second contacting portion are provided, and a distance between the first guiding portion and the second guiding portion is provided so as to be changed gradually.

6. The disc loading and ejecting device according to claim 5, wherein the first guiding portion and the second guiding portion are provided so that the plurality of contacting portions of the contacting lever members are turned so as to be arranged in a direction substantial parallel with a loading and ejecting direction for the disc when the contacting lever members come into contact with portions, which gives a maximum diameter in a width direction of the device, of the disc being loaded into the device.

7. The disc loading and ejecting device according to claim 1, wherein the contacting portions are formed of roller members which are held rotatably by the detecting lever members respectively.

8. The disc loading and ejecting device according to claim 7, wherein a fixed regulating member for reducing a level difference of the disc in a disc diameter direction is provided between adjacent roller members out of the plurality of roller members.

9. The disc loading and ejecting device according to claim 8, wherein only the plurality of roller members come into contact with the disc during loading or ejecting a normal disc, and the regulating member is provided so that a clearance exists between the regulating member and the disc.

10. A disc device comprising the disc loading and ejecting device set forth in claim 1.

11. An electronic device comprising the disc device set forth in claim 10.
